Europäisches Patentamt

(19) European Patent Office

Office européen des brevets

(11) Publication number : **0 307 049 B1**

(12) # EUROPEAN PATENT SPECIFICATION

(45) Date of publication of patent specification :
**04.12.91 Bulletin 91/49**

(51) Int. Cl.⁵ : **A01J 25/16**

(21) Application number : **88201925.0**

(22) Date of filing : **07.09.88**

(54) **A stackable cheese storage box, as well as a cheese store suitable for such stackable cheese storage boxes.**

(30) Priority : **08.09.87 NL 8702127**

(43) Date of publication of application :
**15.03.89 Bulletin 89/11**

(45) Publication of the grant of the patent :
**04.12.91 Bulletin 91/49**

(84) Designated Contracting States :
**AT BE DE FR GB IT NL SE**

(56) References cited :
**NL-A- 7 902 942
NL-A- 8 001 717
NL-A- 8 402 180**

(73) Proprietor : **Coöperatieve
Melkproductenbedrijven Noord-Nederland
B.A.
Poolsterweg 1
NL-8938 AN Leeuwarden (NL)**

(72) Inventor : **Veneboer, Willy Geert Herman
Paalakkers 10
NL-8426 GB Appelscha (NL)**

(74) Representative : **Smulders, Theodorus A.H.J.,
Ir. et al
Vereenigde Octrooibureaux Nieuwe Parklaan
107
NL-2587 BP 's-Gravenhage (NL)**

## Description

This invention relates to stackable cheese storage box with cheese storage platforms bounded by horizontal cheese shelves and vertical air shafts extending through said platforms, said air shafts being connected to horizontal air nozzles, the air supply to the vertical air shafts taking place through horizontal air ducts.

A cheese storage box of this type is known from Dutch patent application 7902942. The vertical air shafts therein are provided in the longitudinal median plane of the cheese storage box. On each platform, four air nozzles are inserted directly into a vertical air shaft, each air nozzle covering a quadrant of the storage platform. Approximately in the horizontal median plane of the cheese storage box, there are provided horizontal air ducts connected to the vertical air shafts for supplying conditioned air to the air nozzles. It is the object to dry each cheese lying on a storage platform individually with the conditioned air emerging from only one air nozzle. The supply of conditioned air to the horizontal air ducts of the cheese storage box takes place via air supply hoses hanging in the store, said hoses being connected to the mouth of a horizontal air duct on the side wall of a cheese storage box. On removal of a cheese storage box, the air supply hoses have to be uncoupled manually from the cheese storage boxes, which, as practice has taught, is regularly forgotten, so that the air supply hoses are torn loose. When stacking the cheese storage boxes in the store, uncoupling of the air supply hoses, or their connection to the cheese storage boxes is very difficult, because this necessitates climbing on the cheese storage boxes.

It is an object of the present invention to provide a cheese storage box which removes these drawbacks and wherein the air supply system is constructed in such a manner that on vertical stacking of the cheese storage boxes, the air supply system of the upper storage box is connected automatically to the air supply system of the subjacent storage box.

According to the present invention, the cheese storage box is characterized in that it comprises an open-bottom air distributor divided into at least two compartments and located in the bottom of the cheese storage box, one compartment being connected through the horizontal air ducts to one of the air shafts comprising a hollow vertical column of the storage box, said vertical column being connected per platform to a horizontal air distributing tube having the air nozzles, and the other compartment being connected to a second of the air shafts comprising a second hollow, vertical column connected to at least one opening provided in the upper wall of the storage box, said opening being situated vertically above the air distributor.

The cheese storage box according to the present invention comprises two separated air supply systems, the one serving to supply conditioned air to the cheeses placed in the storage box, the other only serving for supplying air to an opening provided in the upper wall of the storage box, said opening connecting to the air supply system of a cheese storage box placed on an identical storage box.

To ensure a proper contiguity of the compartmentalized air distributor with the floor of the store, or the upper wall of a subjacent cheese storage box, the air distributor is preferably movable in vertical direction relatively to the bottom of the storage box, while the horizontal air ducts for connecting the compartments of the air distributor to the hollow, vertical columns partly consist of flexible hoses. In order to improve the sealing of the air distributor relative to the surroundings, its underside preferably has a seal that seals off said air distributor relatively to a supporting floor.

The horizontal air distributing tubes connected to a vertical column are preferably situated in a front or rear wall of a cheese storage box, while the air nozzles are placed in the horizontal air distributing tube in such a manner that one half thereof blows air to the interior of the storage box, while the other half blows air in opposite direction. In this manner, it is ensured that in cheese storage boxes placed in the front and rear walls face-to-face, the front rows of cheeses of the rear storage box are supplied with air by the air nozzles of the front cheese storage box.

To enable an individual flow rate control of the air nozzles, these may be placed rotatably within the horizontal air distributing tubes, and the end of the air nozzles extending into the air distributing tube may be beveled.

In order to still further improve the aeration of cheeses placed in the cheese storage boxes, an air discharge system may be provided in addition to an air supply system in a storage box. In cheese storage boxes with an air discharge system, the air distributor is divided into four separate compartments, two of which are connected to the air supply system, the other two compartments being connected to the air discharge system, consisting of two hollow, vertical columns, one of which is connected to horizontal air discharge tubes, one for each platform.

The present invention further relates to a cheese store suitable for applying stackable cheese storage boxes, together with one of the cheese storage boxes of the present invention. To that end, the store floor contains a series of air outflow openings arranged in a pattern adjusted to the length and width dimensions of the storage boxes, said openings being positioned to communicate with the compartments of the air distributors of cheese storage boxes to be placed on the store floor, said air outflow openings also being in communication with air supply ducts extending underneath the store floor.

When the cheese storage boxes used also have an air discharge system, there are provided in the store floor air outflow openings and air exhaust openings being positioned to communicate with the associated compartments of the air distributors of cheese storage boxes with air discharge system placeable on the store floor, there being provided underneath the store floor alternately air supply and air exhaust ducts communicating with associated openings in the store floor.

Some embodiments of the cheese storage box and of the cheese store according to the present invention will now be described, by way of example, with reference to the accompanying drawings, in which :

Fig. 1 shows a store floor with stackable cheese storage boxes with an air supply system placed thereon ;

Fig. 2 is a diagrammatic cross-sectional view of the connection of an air distributor to an air supply duct in a store floor ;

Fig. 3 is a top elevational view of two cheese storage boxes placed face-to face ;

Fig. 4 is a cross-sectional detail view taken on the line IV-IV of Fig. 3 ;

Fig. 5 is a detail view of the connection of the horizontal air distributing tube to a vertical air shaft ;

Fig. 6 is a cross-sectional view taken on the line VI-VI of Fig. 5 ; and

Fig. 7 shows a store floor with cheese storage boxes according to Fig. 1, wherein the storage boxes have an air discharge system.

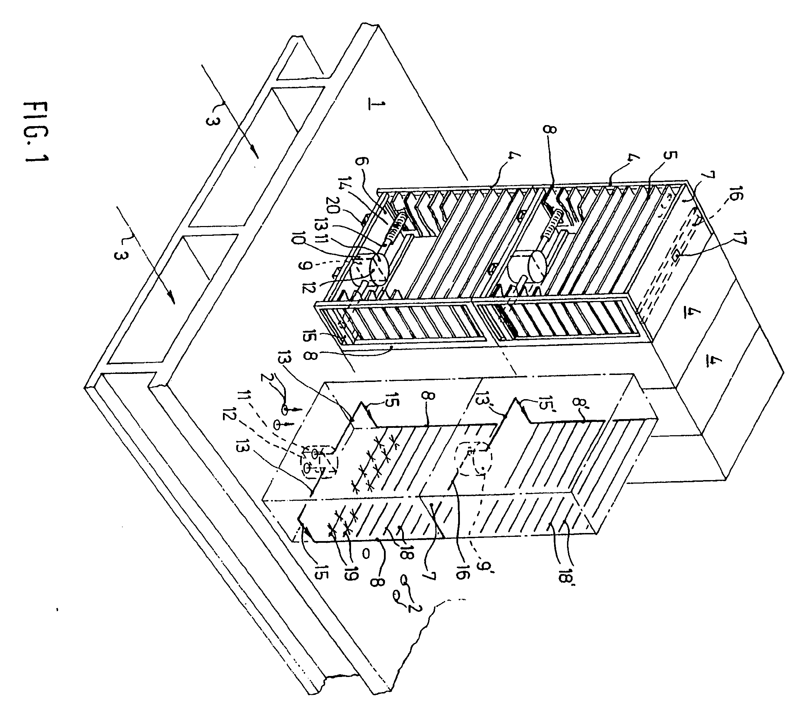

Fig. 1 shows a cheese store floor 1 with air supply ducts 3 provided underneath. Floor 1 contains air outflow openings 2 arranged in a pattern adjusted to the length and width dimensions of the storage boxes 4 placed on floor 1. Said storage boxes 4 are constructed identically and stacked onto each other vertically in two layers. The storage boxes are placed with their front and rear walls face-to-face. Two air outflow openings 2 are provided in the store floor 1 for each lower storage box 4.

Each cheese storage box 4 consists of an imperforate bottom 6, an upper wall 7 and four vertical columns 8, at least two being hollow and serving as air guide duct. The cheese storage box 4 contains a series of horizontal superposed cheese shelves 5 for placing the cheeses to be aerated thereon.

The underside of each storage box 4 contains an open-bottom air distributor 9 divided by a partition 10 into two compartments 11, 12. The air distributor has an open bottom so that, upon placement of a storage box 4 on the store floor 1, each compartment 11, 12 is connected to an air outflow opening 2. Each compartment 11, 12 is connected through horizontal air ducts 13, 15 to a hollow, vertical column 8 provided in the rear wall of the cheese storage box. Air distributor 9 is vertically movable relatively to the bottom 6 of storage box 4, so that it is necessary to make the horizontal air ducts 13 at least partly flexible. These horizontal air ducts 13 are connected to the horizontal air ducts 15 by a hose 14.

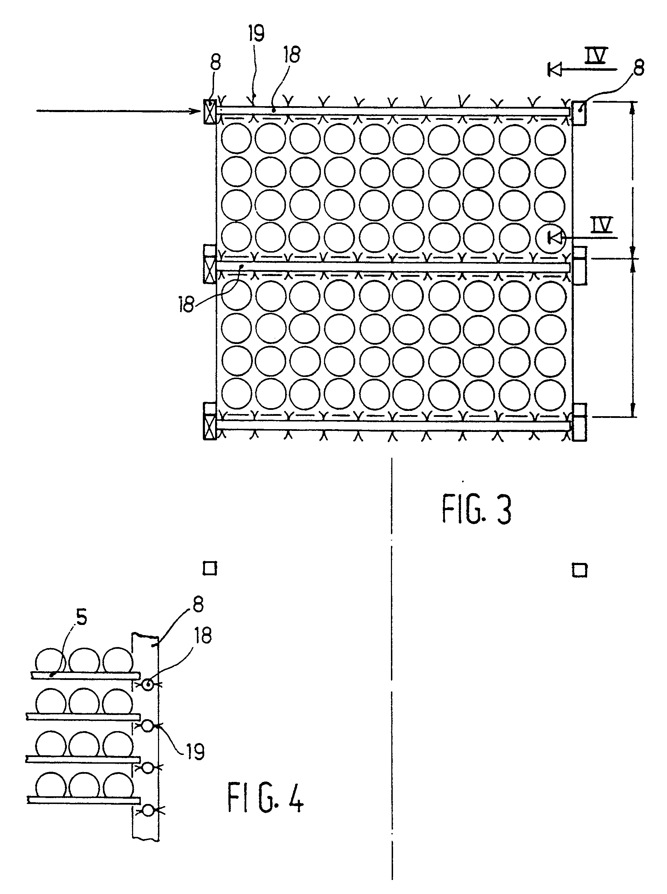

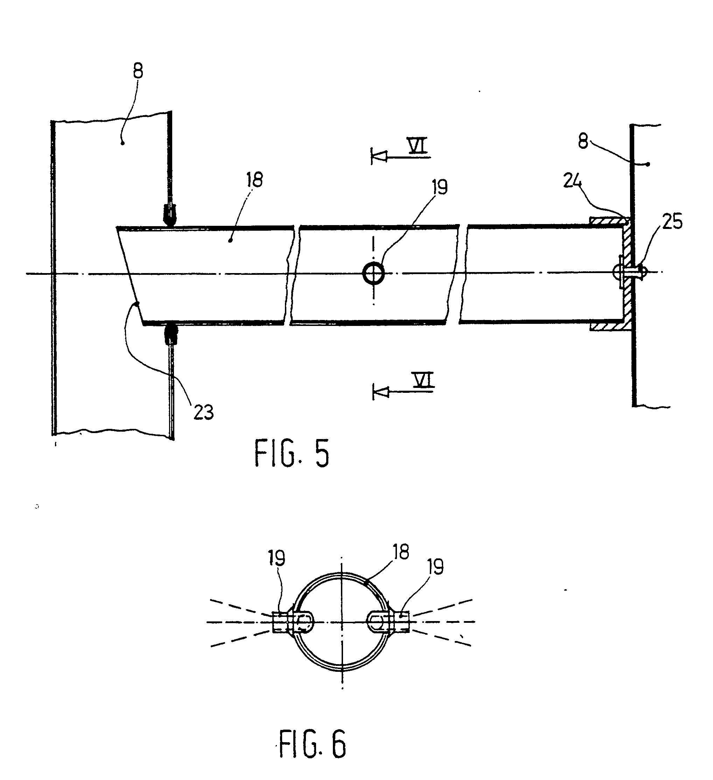

The configuration of the air supply system in a cheese storage box 4 is clearly shown in the transparent illustration of the cheese storage box shown in the right-hand half of Fig. 1. The left-hand compartment 11 of the air distributor 9 connects to an air outflow opening 2 in store floor 1. Air is supplied through the horizontal air ducts 13, 15 to the hollow, vertical column 8 located in the rear wall of the storage box 4. Said vertical column 8 is shut off at its top. A series of horizontal air distributing tubes 18 are inserted into said column 8 in a manner as shown in further detail in Fig. 5. The horizontal air distributing tubes 18 continue as far as the other, right-hand vertical column 8 and are shut off at their ends by a closure member 24, connected with a securing pin 25 to the last mentioned vertical column 8. Adjacent the left-hand vertical column 8, there is provided a seal 22 around the horizontal air distributing tube 18. The end of the horizontal tube 18 extending into the left column 8 is beveled, as shown at 23. By rotating the horizontal air distributing tube 18, the beveled end 23 thereof is capable of causing air rising to a lesser or greater extent in column 8 to flow into the horizontal air distributing tube 18. Diametrically opposed air nozzles 19 are inserted into said tube 18. The end of the nozzles 19 extending into tube 18 is provided with a beveled end similarly so that shown in Fig. 5 for tube 18. One row of air nozzles 19, placed in tube 18 at regularly spaced points, blows air to the interior of cheese storage box 4, while the opposite air nozzles 19 blow air in opposite direction. The air emerging from the latter air nozzles 19 is destined for aerating cheeses located in a cheese storage box 4 whose front is situated against the rear of the first storage box. Each platform between two cheese shelves has its own horizontal air distributing tube 18 (see Fig. 4).

The cheese storage box 4 placed on the store floor 1, consequently, is provided with conditioned air through compartment 11, the horizontal air ducts 13, 15, the vertical column 8 and the connecting horizontal air distributing tubes 18 with the air nozzles 19 placed therein.

The horizontal air ducts 13, 15 connecting to compartment 12 of the air distributor 9 are connected to the right-hand vertical column 8 whose top communicates with an air duct 16 having an air outlet port 17 and provided in the upper wall 7 of the storage box 4. The location of said port 17 in the upper wall 7 is such that, upon placement of a second storage box 4 on top of another storage box, said port 17 terminates in the left-hand compartment 11 of the air distributor 9 of the upper storage box. This means that air is supplied through compartment 12 of the lower storage box 4 to compartment 11 of the upper storage box and from said compartment 11 through the horizontal air ducts 13', 15' and the vertical column 8 air is supplied to the horizontal air distributing tubes 18' of the upper storage box. During the vertical stacking of the identical cheese storage boxes, the upper storage box 4 is connected automatically to the air supply duct 3 located underneath the store floor 1.

For practical reasons, the height of the cheese storage box is about 2,5 m, being about the lifting height forklift truck, so that such a forklift truck allows convenient stacking of a cheese storage box 4 onto another one.

The depth of a cheese storage box is preferably chosen in such a manner that two Gouda cheeses or four Edam cheeses (Fig. 3) can be placed on a cheese shelf 5. The width of a storage box is preferably chosen in such a manner that a storage box filled with cheese has a weight attuned to the conventional transport means.

When more than two cheese storage boxes 14 are to be stacked onto each other, a second outlet port 17 has to be made in the horizontal air duct 16 in the upper wall 7 of a cheese storage box at such a location that said port terminates in the compartment 12 of the air distributor 9 of a storage box 4 stacked on said upper wall 7. Air is then supplied through said compartment 12 and passed on through the air supply ducts of said storage box 4 to the following, higher placed storage box. All storage boxes have an identical construction, so that they can occupy both a lower and an upper position in the vertical cheese storage box stack.

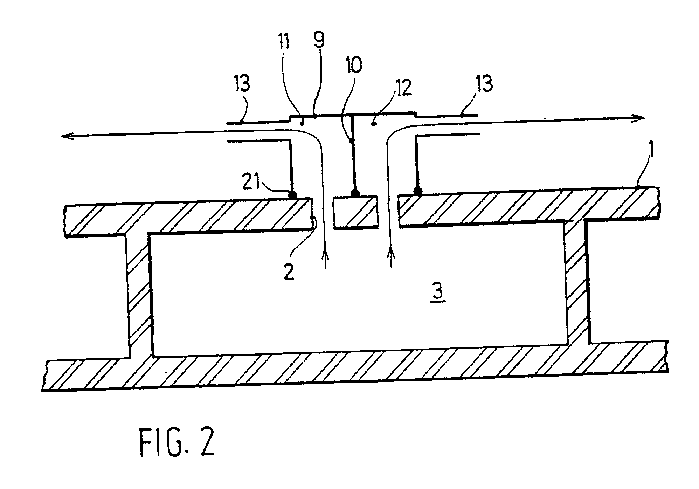

A shown in Fig. 1, guide channels 20 are provided underneath the bottom 6 of a cheese storage box 4 for the lifting arms of a forklift truck. Inserted in said guide channels are vertical pins connected to the air distributor 9, so that, upon insertion of the lifting arms of a forklift truck into the guides 20, the air distributor 9 is moved vertically upwards, so that the air distributor becomes clear of the store floor 1 or of an upper wall 7 of a lower storage box 4. This vertical movement from the air distributor 9 prevents the seal 21 (Fig. 2) present at its underside from making a sliding movement over the store floor 1 which adversely affects its service life.

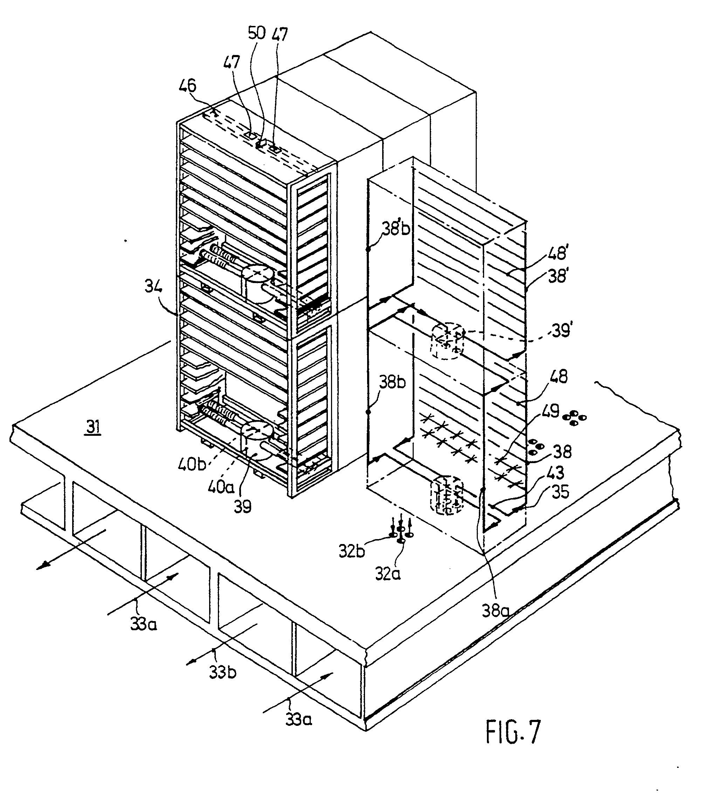

Fig. 7 shows a plurality of cheese storage boxes 34 in stacked, face-to-face position according to Fig. 1. Storage boxes 34 differ from storage boxes 4 shown in Fig. 1 in that the boxes 34 have an air discharge system in addition to an air supply system. Naturally, the store floor 31 should be constructed in such a manner that it is suitable for discharging air from the storage space. To that effect, air supply ducts 33a and air discharge ducts 33b are alternately provided underneath the store floor 31 while store floor 31 contains air outflow openings 32a and air exhaust openings 32b in a pattern described above with reference to Fig. 1. Naturally, the air exhaust openings 32b are connected to the air discharge duct 33b and the air outflow openings 32a are connected to the air supply ducts 33a.

The air distributor 39 is divided into four compartments by means of two right-angled partitions 40a, 40b. The two right-hand compartments serve for supplying air to the cheese storage box 34, the two left-handed compartments for discharging air from the storage box 34. The air supply system to storage box 34 is identical to the air supply system in storage box 4 shown in Fig. 1. Air is supplied through a compartment of the air distributor 39 and the horizontal air ducts 43, 45 to the hollow vertical column 38, to which are connected horizontal air distributing tubes 48 having air nozzles 49. The air supply to the upper cheese storage box 34 takes place through the column 38a opposite the vertical column 38, said column 38a being connected through a duct 46 provided in the upper wall of the storage box to the air distributor 39' of the upper storage box 34. Air is supplied through said air distributor 39' to the vertical column 38', to which are connected again the horizontal air distributing tubes 48' of the upper storage box 34. The air outlet opening 47 in the upper wall of storage box 34 is naturally placed in such a manner that said opening 47 terminates in the air passage compartment of air distributor 39'.

The exhaustion of air from the cheese storage box takes place through horizontal tubes, not shown, having air exhaust openings and located in the front wall of the storage box opposite the air distributing tubes 48 located in the rear wall. The air discharge tubes are connected to the vertical column 38b whose underside is connected through horizontal ducts to the air exhaust compartments of the air distributor 39 of the lower storage box 34. The vertical column situated opposite the air discharge column 38b in the rear wall of storage box 34 serves for discharging air originating from the upper storage box. This hollow, vertical column is connected through the air distributors 39' to the vertical air exhaust column 38'b of the upper storage box. Naturally, each upper wall of storage box 34 contains a second opening 47 terminating in the horizontal air duct 46 for connecting the air exhaust system of the upper storage box through the air distributor 39' to the air exhaust system of the lower storage box. A partition 50 is provided in duct 46 between the two openings 47 for effecting a division in the horizontal duct 46, located in the upper wall of storage box 34, between the air supply and the air exhaust system.

Naturally, the cheese storage boxes 34 having an air exhaust system can also be constructed in such a manner that more than two of said storage boxes can be stacked onto each other. In that case, care should be taken that four holes 47 are provided in the upper wall 37 of each storage box 34 for each of the four compartments of the air distributors 39, 39', said holes connecting to the four divided compartments of the air distributors 39, 39'.

As the air pressure in the air supply ducts 3, 33a underneath the store floor 1, 31 is low, it is not necessary to cover the air outflow openings 2, 32a in the floor, on which no cheese storage box 4, 34 is placed. The same applies to the openings 17, 47 in the upper wall 7, 37 of the cheese storage boxes 4, 34. The air flowing freely from said holes has no adverse effect on the air supply to the supply systems in the storage boxes 4, 34.

## Claims

1. A stackable cheese storage box having storage platforms bounded by horizontal cheese shelves (15) and vertical air shafts extending through said platforms, said air shafts being connected to horizontal air nozzles (19), the air supply to the vertical air shafts taking place through horizontal air ducts (13), characterized in that the cheese storage box (4) is provided with an open-bottom air distributor (9) divided into at least two separate compartments (11, 12) and located in the bottom (6) of the cheese storage box (4), one compartment (11) being connected through said horizontal air ducts (13, 15) to one of said air shafts comprising a hollow, vertical column (8) of the storage box (4), said vertical column (8) being connected per platform to a horizontal air distributing tube (18) having said air nozzles (19) and the other compartment (12) being connected to a second of said air shafts comprising a second hollow, vertical column (8) connected to at least one opening (17) provided in the upper wall (7) of the storage box (4), said opening (17) being situated vertically above the air distributor (9).

2. A stackable cheese storage box as claimed in claim 1, characterized in that the air distributor (9) if movable vertically relatively to the bottom (6) of the storage box (4), while the horizontal air ducts (13) for connecting the compartments (11, 12) of the air distributor (9) to the hollow vertical columns (8) consist partly of flexible hoses (14).

3. A stackable cheese storage box as claimed in claims 1-2, characterized in that at the underside of the air distributor (9) there is provided a seal (21), which, in a cheese storage box (4) placed on a supporting floor (1, 7), seals the air distributor (9) relatively to said supporting floor (1, 7).

4. A stackable cheese storage box as claimed in claims 1-3, characterized in that the horizontal air distributing tubes (18) connected to a vertical column (18) are located in a front or a rear wall of a cheese storage box (4), with the air nozzles (19) being placed in the horizontal air distributing tube (18) in such a manner that one half thereof blows air to the interior of the cheese storage box (4), the other half blowing air in opposite direction.

5. A stackable cheese storage box as claimed in claim 4, characterized in that the air nozzles (19) are placed rotatably in the horizontal air distributing tubes (18), and the end of the air nozzles extending into the air distributing tube (18) is beveled.

6. A stackable cheese storage box as claimed in claims 1-3, characterized in that the bottom (6) of the box (4) is provided with guide channels (20) for the lifting arms of a lift truck, in which guide channels (20) terminate pins connected to the air distributor (9) in such a manner that, upon insertion of the lifting arms into the guide channels (20), the seal (21) of the air distributor (9) comes clear of the supporting floor (1, 7).

7. A stackable cheese storage box as claimed in any one of claims 1-6, characterized in that the air distributor (9) is divided into four separate compartments, two being connected to the air supply system (38a), the other two compartments being connected to an air discharge system provided in the cheese storage box, said system consisting of two hollow, vertical columns (38b), one being connected to horizontal air discharge tubes, one for each platform.

8. A cheese store suitable for stackable cheese storage boxes as claimed in any one of claims 1-7 in combination with at least one such storage box, characterized in that the store floor (1) contains a series of air outflow openings (2) in a pattern attuned to the length and width dimensions of the cheese storage boxes (4), said air outflow openings (2) being positioned to communicate with the air distributors (9) of the compartments (11, 12) of cheese storage boxes (4) placeable on the store floor, said air outflow openings (2) also communicating with air supply ducts (3) extending underneath the store floor (1).

9. A combination as claimed in claim 8, characterized in that the store floor (31) contains air outflow openings (32a) and air exhaust openings (32b) being positioned to communicate with the associated compartments of the air distributors (39) of cheese storage boxes (34) with air discharge system placeable on the store floor (31), while underneath the store floor (31) there are alternately provided air supply and air exhaust ducts (33a, 33b), which communicate with the associated openings (32a, 32b) in the store floor (31).

## Patentansprüche

1. Stapelbares Käselagerungsregal mit Lagerplattformen, die durch horizontale Käsefachbretter (15) und vertikale Luftschächte, die sich durch die Plattformen erstrecken, eingefaßt sind, wobei die Luftschächte mit horizontalen Luftdüsen (19) verbunden sind und die Luftversorgung für die vertikalen Luftschächte durch horizontale Luftleitungen (13) erfolgt, dadurch gekennzeichnet, daß das Käselagerungsregal (4) mit einem Luftverteiler (9) mit offenem Boden versehen ist, der in wenigstens zwei separate Kammern (11, 12) unterteilt und im Boden (6) des Käselagerungsregals (4) lokalisiert ist, wobei eine Kammer (11) über die horizontalen Luftleitungen (13, 15) mit einem der Luftschächte verbunden ist, welche eine hohle, vertikale Säule (8) des Lagerungsregals (4) aufweist, wobei die vertikale Säule (8) pro Plattform mit einem die Luftdüsen (19) aufweisenden horizontalen Luftverteilerrohr (18) verbunden ist und wobei die andere Kammer (12) mit einem zweiten der Luftschächte verbunden ist, welcher eine zweite, hohle, vertikale Säule (9) aufweist, die mit wenigstens einer in der oberen Wand (7) des Lagerungsregals (4) vorgesehenen Öffnung (17) verbunden ist, welche sich vertikal oberhalb des Luftverteilers (9) befindet.

2. Stapelbares Käselagerungsregal nach Anspruch 1, dadurch gekennzeichnet, daß der Luftverteiler (9) relativ zum Boden (6) des Lagerungsregals (4) vertikal beweglich ist und die zur Verbindung der Kammern (11, 12) des Luftverteilers (9) mit den hohlen vertikalen Säulen (8) vorgesehenen horizontalen Luftleitungen (13) teilweise aus flexiblen Schläuchen (14) bestehen.

3. Stapelbares Käselagerungsregal nach Ansprüchen 1-2, dadurch gekennzeichnet, daß an der Unterseite des Luftverteilers (9) eine Dichtung (21) vorgesehen ist, die bei einem auf einen tragenden Boden (1, 7) aufgesetzten Käselagerungsregal (4) den Luftverteiler (9) relativ zu dem tragenden Boden (1, 7) abdichtet.

4. Stapelbares Käselagerungsregal nach Ansprüchen 1-3, dadurch gekennzeichnet, daß die mit einer vertikalen Säule (8) verbundenen horizontalen Luftverteilerrohre (18) in einer vorderen oder einer rückwärtigen Wand eines Käselagerungsregals (4) lokalisiert sind, wobei die Luftdüsen (19) in dem horizontalen Luftverteilerrohr (18) in solcher Weise plaziert sind, daß eine Hälfte der Düsen Luft in das Innere des Käselagerungsregals (4) bläst und die andere Hälfte Luft in entgegengesetzte Richtung bläst.

5. Stapelbares Käselagerungsregal nach Anspruch 4, dadurch gekennzeichnet, daß die Luftdüsen (19) drehbar in den horizontalen Luftverteilerrohren (18) plaziert sind und daß das Ende der Luftdüsen, das sich in das Luftverteilerrohr (18) erstreckt, abgeschrägt ist.

6. Stapelbares Käselagerungsregal nach Ansprüchen 1-3, dadurch gekennzeichnet, daß der Boden (6) des Regals (4) mit Führungskanälen (20) für die Hebearme eines Gabelstaplers versehen ist, wobei mit dem Luftverteiler (9) verbundene Stifte in den Führungskanälen (20) in der Weise enden, daß bei Einführung der Hebearme in die Führungskanäle (20) die Dichtung (21) des Luftverteilers (9) von dem tragenden Boden (1, 7) freikommt.

7. Stapelbares Käselagerungsregal nach einem der Ansprüche 1-6, dadurch gekennzeichnet, daß der Luftverteiler (9) in vier separate Kammern unterteilt ist, von denen zwei mit dem Luftversorgungssystem (38a) und die anderen beiden Kammern mit einem in dem Käselagerungsregal vorgesehenen Luftablaßsystem verbunden sind, welches aus zwei hohlen vertikalen Säulen (38b) besteht, von denen eine mit horizontalen Luftablaßrohren, jeweils eines für jede Plattform, verbunden ist.

8. Käselager für stapelbare Käselagerungsregale nach einem der Ansprüche 1-7 in Kombination mit wenigstens einem derartigen Lagerungsregal, dadurch gekennzeichnet, daß der Lagerboden (1) eine Reihe von Luftausströmöffnungen (2) in einem Muster enthält, das der Länge und Breite der Käselagerungsregale (4) angepaßt ist, wobei die Luftausströmöffnungen (2) so positioniert sind, daß sie mit den Luftverteilern (9) der Kammern (11, 12) von Käselagerungsregalen (4), die auf dem Lagerboden plazierbar sind, kommunizieren, und wobei die Luftausströmöffnungen (2) weiterhin mit Luftversorgungsleitungen (3) kommunizieren, die sich unter dem Lagerboden (1) erstrecken.

9. Kombination nach Anspruch 8, dadurch gekennzeichnet, daß der Lagerboden (31) Luftausströmöffnungen (32a) und Luftablaßöffnungen (32b) aufweist, die so positioniert sind, daß sie mit zugehörigen Kammern der Luftverteiler (39) von mit Luftablaßsystem ausgerüsteten und auf den Lagerboden (31) aufsetzbaren Käselagerungsregalen (34) kommunizieren, wobei unter dem Lagerboden (31) abwechselnd Luftversorgungsleitungen und Luftablaßleitungen (33a, 33b) vorgesehen sind, die mit den zugehörigen Öffnungen (32a, 32b) in dem Lagerboden (31) kommunizieren.

## Revendications

1. Boîte de stockage de fromage empilable ayant des plateformes de stockage délimitées par des étagères à fromage horizontales (15) et des colonnes d'air verticales s'étendant à travers lesdites plateformes, lesdites colonnes d'air étant connectées à des buses d'air horizontales (19), l'arrivée d'air dans les colonnes d'air verticales s'effectuant par des conduits d'air horizontaux (13), caractérisée en ce que la boîte de stockage de fromage (4) est munie d'un distributeur d'air à fond ouvert (9) divisé en au mois deux compartiments séparés (11, 12) et situé dans le fond (6) de la boîte de stockage de fromage (4), un compartiment (11) étant connecté, par l'intermédiaire desdits conduits d'air verticaux (13, 15), à l'une desdites colonnes d'air verticales, comportant une colonne verticale creuse (8) de la boîte de stockage (4), ladite colonne verticale (8) étant connectée par une plateforme à un tube de distribution d'air horizontal (18) comportant lesdites buses d'air (19), et l'autre compartiment (12) étant connecté à une deuxième desdites colonnes d'air, comportant une deuxième colonne verticale creuse (8) connectée à au mois une ouverture (17) pratiquée dans la paroi supérieure (7) de la boîte de stockage (4), ladite ouverture (17) étant située verticalement au-dessus du distributeur d'air (9).

2. Boîte de stockage de fromage empilable caractérisée en ce que le distributeur d'air (9) est mobile verticalement par rapport au fond (6) de la boîte de stockage (4), tandis que les conduits d'air horizontaux (13) pour connecter les compartiments (11, 12) du distributeur d'air (9) aux colonnes verticales creuses (8) se composent partiellement de tuyaux souples (14).

3. Boîte de stockage de fromage empilable selon la revendication 1 ou 2, caractérisée en ce que, au niveau de la face inférieure du distributeur d'air (9), est disposé un joint (21), qui, dans une boîte de stockage de fromage (4) placée sur un plancher de support (1, 7), assure une étanchéité entre le distributeur d'air (9) et ledit plancher de support (1, 7).

4. Boîte de stockage de fromage empilable selon les revendications 1 à 3, caractérisée en ce que les tubes (18) de distribution d'air horizontaux (18) connectés à une colonne verticale (8) sont situés dans une paroi avant ou arrière d'une boîte de stockage de fromage (4), les buses d'air (19) étant placées dans le tube (18) de distribution d'air horizontal, de telle façon qu'une moitié de celles-ci souffle de l'air à l'intérieur de la boîte de stockage de fromage (4), l'autre moitié soufflant de l'air dans la direction opposée.

5. Boîte de stockage de fromage empilable selon la revendication 4, caractérisée en ce que les buses d'air (19) sont placées de façon à pouvoir tourner dans les tubes (18) de distribution d'air horizontaux, et en ce que l'extrémité des buses d'air s'étendant à l'intérieur du tube (18) de distribution d'air est chainfreinée.

6. Boîte de stockage de fromage empilable selon les revendications 1 à 3, caractérisée en ce que le fond (6) de la boîte (4) est muni de canaux de guidage (20) pour les bras de levage d'un chariot élévateur, canaux de guidage (20) dans lesquels aboutissent des broches connectées au distributeur d'air (9), de telle façon que, lors de l'insertion des bras de levage dans les canaux de guidage (20), le joint (21) du distributeur d'air (9) soit séparé du plancher de support (1, 7).

7. Boîte de stockage de fromage empilée selon l'une quelconque des revendications 1 à 6, caractérisée en ce que le distributeur d'air (9) est divisé en quatre compartiments séparés, deux d'entre eux étant connectés au système (38a) de délivrance d'air, les deux autres compartiments étant connectés à un système de décharge d'air disposé dans la boîte de stockage de fromage, ledit système étant composé de deux colonnes verticales creuses (38b), chacune d'entre elles étant connectée aux tubes de décharge d'air horizontaux, à raison d'une pour chaque plateforme.

8. Dispositif de stockage de fromage approprié pour empiler des boîtes de stockage de fromage selon l'une quelconque des revendications 1 à 7, en combinaison avec au moins une de ces boîtes de stockage, caractérisé en ce que le plancher de stockage (1) contient une série d'ouvertures (2) de sortie d'air disposées selon un motif correspondant aux dimensions de longueur et de largeur des boîtes de stockage de fromage (4), lesdites ouvertures (2) de sortie d'air étant positionnées de façon à communiquer avec les distributeurs d'air (9) des compartiments (11, 12) de ces boîtes de stockage (4) qui peuvent être placées sur le plancher de stockage, lesdites ouvertures (2) de sortie d'air communiquant également avec des conduits (3) de délivrance d'air s'étendant en dessous du plancher de stockage (1).

9. Combinaison selon la revendication 8, caractérisée en ce que le plancher de stockage (31) contient des ouvertures (32a) de sortie d'air et des ouvertures (32b) d'évacuation d'air, qui sont positionnées de façon à communiquer avec les compartiments associés des distributeurs d'air (39) des boîtes de stockage de fromage (34) avec un système de décharge d'air pouvant être placé sur le plancher de stockage (31), tandis que sont disposés en alternance, sous le plancher de stockage (31), des conduits de délivrance d'air et d'évacuation d'air (33a, 33b) qui communiquent avec les ouvertures associées (32a, 32b) dans le plancher de stockage (31).

FIG. 1

FIG. 2

FIG. 3

FIG. 4

FIG. 5

FIG. 6

FIG. 7